# EUROPÄISCHE PATENTSCHRIFT

(11) **EP 0 628 390 B1**
(45) Veröffentlichungstag und Bekanntmachung des Hinweises auf die Patenterteilung: **23.04.1997**
(21) Anmeldenummer: 93109160.7
(22) Anmeldetag: 08.06.1993
(51) Int. Cl.: B29B 7/60

(54) **Dosier- und Förderpumpe und Verwendung einer solchen Pumpe in einer Anlage zur Herstellung eines Giessharzkörpers**
Proportioning and conveyer pump and employment of such a pump for making moulded resin bodies
Pompe de dosage et de transport et utilisation d'une telle pompe dans une installation pour la fabrication de corps moulés en résine

(43) Veröffentlichungstag der Anmeldung: 14.12.1994
(73) Patentinhaber: MICAFIL Vakuumtechnik AG, CH-8048 Zürich (CH)
(72) Erfinder: Gmeiner, Paul, CH-8966 Lieli (CH)
(74) Vertreter: Kaiser, Helmut

(56) Entgegenhaltungen:
- EP-A- 0 133 292
- EP-A- 0 330 032
- EP-A- 0 421 378
- DE-A- 2 705 223
- FR-A- 2 399 008
- FR-A- 2 565 158
- GB-A- 1 305 630
- US-A- 4 286 732

## Beschreibung

### TECHNISCHES GEBIET

Bei der Erfindung wird ausgegangen von einer Pumpe zum Dosieren einer Ausgangskomponente und zum Fördern einer dosierten Menge der Ausgangskomponente in einen Mischer nach dem Oberbegriff von Patentanspruch 1. Die Erfindung betrifft auch eine Verwendung dieser Dosier- und Förderpumpe in einer Anlage zur Herstellung eines Giessharzkörpers.

### STAND DER TECHNIK

Die Erfindung nimmt dabei Bezug auf einen Stand der Technik von Dosier- und Förderpumpen wie er sich aus DE 27 05 223 A1 gemäß dem einleitenden Teil des ersten Anspruchs ergibt. In Fig.8 dieser Patentveröffentlichung ist eine zum Dosieren und Fördern einer flüssigen Ausgangskomponente verwendete Kolbenpumpe der eingangs genannten Art beschrieben. Der in einem Zylinder 26 geführte Kolben 28 dieser Pumpe unterteilt den Zylinder in einen flüssige Ausgangskomponente aufnehmenden ersten und in einen eine inerte Flüssigkeit aufnehmenden zweiten Raum. Der erste Raum ist über ein Ventil 124 mit einem flüssige Ausgangskomponente enthaltenden Tank 98 verbunden. Der zweite Raum ist mit einem die inerte Flüssigkeit enthaltenden Tank 22 verbunden. Beide Tanks werden mit Luft oder Stickstoff unter Druck gesetzt.

Beim Fördern wird das Ventil 124 geschlossen und wird die flüssige Ausgangskomponente durch eine nach vorwärts gerichtete Bewegung des Kolbens 28 zu einem Mischkopf 20 geführt. Hierbei unterstützt der Druck der inerten Flüssigkeit die Kolbenbewegung. Beim Dosieren wird das Ventil 124 geöffnet und unterstützt der Druck der flüssigen Ausgangskomponente die Rückwärtsbewegung des Kolbens 28 gegen den Druck der inerten Flüssigkeit.

Die Drücke in den Tanks 22 und 98 hängen von den Viskositäten der Flüssigkeiten ab und werden mittels Druckregulatoren 133 eingestellt, um so gleich Kräfte auf beiden Seiten des Kolbens zu erzeugen.

Aus DE 41 34 494 A1 ist eine Förder- und Dosiereinrichtung für einen statischen Mischer bekannt, in dem mindestens zwei jeweils durch eine Dosierpumpe geförderte Werkstoffkomponenten miteinander vermischt werden. Jede Dosierpumpe weist ein bei einem Ansaughub Werkstoffkomponente aufnehmendes Volumen auf. Bei der Ausführung eines Förderhubs wird die im Volumen befindliche Werkstoffkomponente über ein Steuerventil in dosierter Weise dem Mischer zugeführt. Die Dosierung der Werkstoffkomponente erfolgt hierbei durch Zerlegung des Förderhubs in Teilhübe, deren Anfang und Ende durch den Hub der Pumpe erfassende Messfühler signalisiert werden. Die Teilhübe werden von den Dosierpumpen wechselweise derart ausgeführt, dass nur jeweils eine Dosierpumpe aktiviert ist. Hierzu bedarf es einer vergleichsweise aufwendigen Steuerung. Zudem benötigt jede Pumpe ein vergleichsweise rasch reagierendes Steuerventil. Ein solches Ventil wird beim Fördern einer Füllstoffe enthaltenden Ausgangskomponente übermässig stark beansprucht.

In EP 0 206 309 A2 ist ein Pumpaggregat mit einer Umwälz- und Dosierpumpe beschrieben. Eine von der Umwälzpumpe in einem Behälter homogenisierte Ausgangskomponente einer reaktiven Giessharzmasse fliesst in ein im Behälterboden vorgesehenes und von einem feststehenden Zylinder der Dosierpumpe begrenztes Dosiervolumen. Bei Ausführung eines Dosierhubes presst ein in den Zylinder geführter Kolben der Dosierpumpe die im Dosiervolumen befindliche dosierte Menge an Ausgangskomponente über ein Rückschlagventil in einen Mischer, in dem durch Vermischen dieser dosierten Menge an Ausgangskomponente mit einer ebenfalls dosierten Menge einer weiteren Ausgangskomponente die reaktive Giessharzmasse gebildet wird. Das Rückschlagventil verhindert bei einem Saughub des Kolbens der Dosierpumpe das Zurückströmen der in den Mischer geförderten Ausgangskomponente.

Bei dieser Dosier- und Förderpumpe ist die in den Mischer geförderte dosierte Menge an Ausgangskomponente bestimmt durch die Grösse des vom Zylinder begrenzten Dosiervolumens und die Anzahl der Dosierhübe. Die zur Herstellung unterschiedlicher Giessharzmassen erforderlichen unterschiedlichen Dosierungen der beiden Ausgangskomponenten können lediglich durch Veränderung der Anzahl der Dosierhübe oder durch Einbau einer Dosierpumpe mit verändertem Dosiervolumen erreicht werden. Bei der Dosierung von Ausgangskomponenten mit abrasiven Füllstoffen können sich Dosierfehler einstellen, da das zwischen Mischer und Pumpe vorgesehene Rückschlagventil dann besonders leicht beschmutzt oder beschädigt wird und das Rückströmen von Ausgangskomponente aus dem Mischer in das Dosiervolumen während eines Saughubes der Dosierpumpe dann nicht mit Sicherheit auszuschliessen ist.

### KURZE DARSTELLUNG DER ERFINDUNG

Der Erfindung, wie sie in Patentansprüche 1 und 14 definiert ist, liegt die Aufgabe zugrunde, eine Pumpe der eingangs genannten Art anzugeben, mit der über lange Betriebszeiträume in einfacher und wirtschaftlicher Weise eine sehr genaue Dosierung der in den Mischer geförderten Ausgangskomponente erreicht wird. Aufgabe der Erfindung ist zugleich auch die Angabe einer Anlage zur Herstellung eines Giessharzkörpers, in der eine solche Pumpe mit besonderem Vorteil verwendet werden kann. Weiterbildungen der Erfindung sind in den abhängigen Ansprüchen 2 bis 13 und 15 definiert.

Die Dosier- und Förderpumpe nach der Erfindung zeichnet sich durch eine sehr grosse Dosiergenauigkeit und Betriebssicherheit aus sowie ein an die jeweiligen Betriebsbedingungen, wie Zusammensetzung der Giessharzmasse oder Grösse der Giessform für den herzustellenden Giessharzkörper, leicht anpassbares, die zu dosierende Ausgangskomponente der Giessharzmasse aufnehmendes Dosiervolumen aus. Das Dosiervolumen kann vor Betrieb der Pumpe durch Eingabe von betriebsbedingungsabhängigen Steuerparametern in die Kontrollvorrichtung leicht so eingestellt werden, dass die Giessform nach einem einzigen Förderhub der Pumpe mit der im Mischer erzeugten reaktiven Giessharzmasse gefüllt wird. Pro Arbeitstakt der Pumpe laufen dann in einer Anlage zum Herstellen von Giessharzkörpern, die zur Herstellung eines Giessharzkörpers erforderlichen Mengen der Ausgangskomponenten bzw. an Giessharzmasse durch die Anlage.

Da das Dosiervolumen der Pumpe nach der Erfindung verhältnismässig gross ist, ist die Hubgeschwindigkeit ihres Kolbens bei der Ausführung eines Dosierhubes relativ klein. Gegebenenfalls in der Ausgangskomponente vorgesehene abrasive Stoffe dringen daher allenfalls nur geringfügig in die zwischen Kolben und Zylinder gelegenen Dichtflächen der Pumpe ein. Die Abnützung der Pumpe ist daher selbst bei der Förderung einer abrasive Füllstoffe enthaltenden Ausgangskomponente minimal. Wegen der geringen Anzahl an Förderhüben ist die Belastung weiterer Pumpenteile, wie gegebenenfalls vorgesehener Ein- und Auslassventile, ebenfalls gering. Da diese Ventile keine schnellen Schaltvorgänge ausführen müssen, brauchen sie nicht als rasch ansprechende, von abrasiven Stoffen rasch beschädigbare Sitzventile ausgeführt zu sein, sondern sind mit Vorteil robuste Schieberventile.

### KURZE BESCHREIBUNG DER ZEICHNUNG

In den Zeichnungen sind bevorzugte Ausführungsformen der erfindungsgemässen Pumpe sowie Anlagen, in der mehrere solcher Pumpen verwendet werden, in vereinfachter Form dargestellt. Hierbei zeigt:
- Fig.1: ein Schaltbild eines Teils einer Anlage zur Herstellung eines Giessharzkörpers mit zwei erfindungsgemässen Pumpen, die getaktet jeweils eine zweier Ausgangskomponenten einer reaktiven Giessharzmasse in dosierter Form in einen die reaktive Giessharzmasse bildenden Mischer fördern,
- Fig.2: ein Schaltbild eines Teils einer Anlage zur Herstellung eines Giessharzkörpers mit vier erfindungsgemässen Pumpen, die kontinuierlich jeweils eine zweier Ausgangskomponenten einer reaktiven Giessharzmasse in dosierter Form in einen die reaktive Giessharzmasse bildenden Mischer fördern,
- Fig.3A: eine Aufsicht auf einen axial geführten Schnitt durch einen Zylinder und einen beweglichen Kolben einer erfindungsgemäss ausgeführten Pumpe zu Beginn eines Ansaughubs,
- Fig.3B: eine Aufsicht auf die Pumpe gemäss Fig.3A nach Beendigung des Ansaughubs,
- Fig.3C: eine Aufsicht auf die Pumpe gemäss Fig. 3A zu Beginn eines Förderhubs,
- Fig.3D: eine Aufsicht auf die Pumpe gemäss Fig. 3A nach Beendigung des Förderhubs,
- Fig.4A: eine Aufsicht auf einen längs IVA-IVA geführten Schnitt durch die Pumpe gemäss Fig.3A,
- Fig.4B: eine Aufsicht auf einen längs IVB-IVB geführten Schnitt durch die Pumpe gemäss Fig.3B,
- Fig.4C: eine Aufsicht auf einen längs IVC-IVC geführten Schnitt durch die Pumpe gemäss Fig.3C, und
- Fig.4D: eine Aufsicht auf einen längs IVD-IVD geführten Schnitt durch die Pumpe gemäss Fig.3D.

### WEGE ZUR AUSFÜHRUNG DER ERFINDUNG

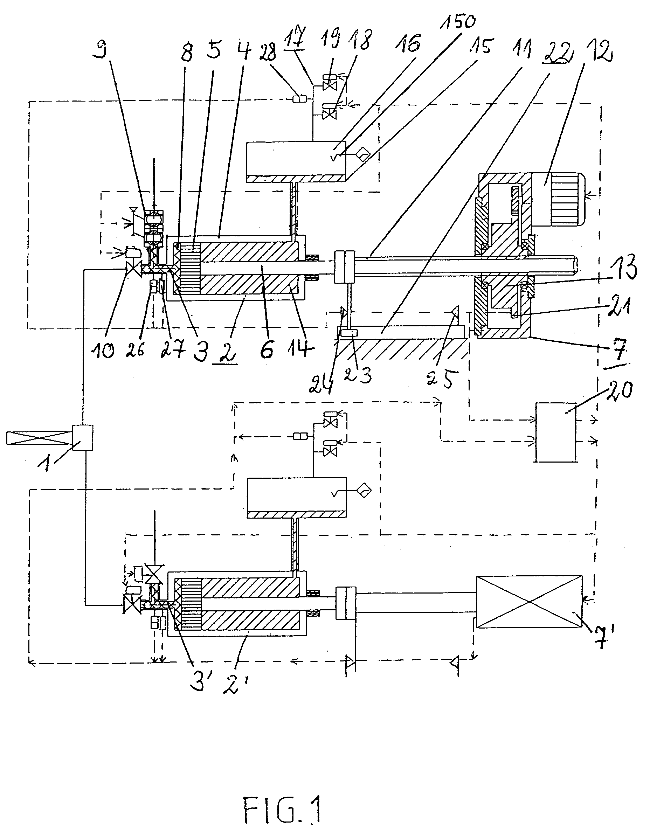

In allen Figuren bezeichnen gleiche Bezugszeichen auch gleichwirkende Teile. Der in Fig. 1 dargestellte Anlagenteil weist einen Mischer 1 auf, dem mittels einer Pumpe 2 eine dosierte Menge einer Ausgangskomponenten 3 und mittels einer Pumpe 2' eine dosierte Menge einer Ausgangskomponente 3' zugeführt werden. Die Ausgangskomponenten 3, 3' sind jeweils entgaste und homogenisierte Flüssigkeiten. Die Ausgangskomponente 3 kann beispielsweise ein Epoxidharz und einen Füllstoff enthalten, die Ausgangskomponente 3' beispielsweise einen Härter und einen Beschleuniger. Aus den Ausgangskomponenten wird im Mischer 1 eine flüssige, entgaste und reaktive Giessharzmasse gebildet, die in eine nicht dargestellten Giessform, etwa eines Schliessautomaten, gefördert und dort zu einem Giessharzkörper ausgehärtet werden kann. Die Pumpe 2 enthält einen feststehenden Zylinder 4 und einen Kolben 5, welcher über eine aus dem Zylinder 4 geführte Kolbenstange 6 mit einem Antrieb 7 verbunden ist. Zylinder 4 und Kolben 5 begrenzen ein Dosiervolumen 8 zur Aufnahme der Ausgangskomponente 3. Das Dosiervolumen 8 ist zu Beginn eines die Ausgangskomponente 3 zum Mischer 1 führenden Förderhubs so gross bemessen, dass die nach dem Vermischen der Ausgangskomponenten 3, 3' im Mischer 1 gebildete reaktive Giessharzmasse die Giessform oder zwei und mehr zueinander parallel geschaltete Giessformen nach dem Ausführen des Förderhubs oder gegebenenfalls einiger weniger Förderhübe der Pumpe 2 vollständig füllt.

Ein die Ausgangskomponente 3 von einem nicht dargestellten Behälter zuführender Einlass des Dosiervolumens ist mittels eines Schieberventils 9 verschliessbar. Ein die dosierte Menge an Ausgangskomponente 3 dem Mischer 1 zuführender Auslass des Dosiervolumens 8 ist nach Schliessen des Schieberventils 9 über ein Schieberventil 10 mit dem Mischer 1 verbindbar. Beide Schieberventile 9 und 10 weisen jeweils zwei hintereinander im Förderweg der Ausgangskomponente 3 angeordnete, drehbare Ventilkörper mit rotationssymmetrischen Dichtflächen auf und sind in ihren beiden Endlagen mit grösster Sicherheit entweder vollständig offen oder vollständig geschlossen. Beide Schieberventile 9, 10 sind gleichartig ausgebildet. Aus Gründen der Übersichtlichkeit ist aus Fig. 1 nur der Aufbau des Schieberventils 9 ersichtlich.

Die Kolbenstange 6 ist an ihrem von Kolben 5 abgewandten Ende als verdrehungssicher geführte und ein Aussengewinde aufweisende Spindel 11 ausgebildet. Ein umlaufender Getriebemotor 12 treibt ein drehbar, aber unverschieblich gelagertes Antriebselement 13 mit einem Innengewinde an. Das Innengewinde arbeitet mit dem Aussengewinde der Spindel 11 zusammen. Spindel 11, Getriebemotor 12 und Antriebselement 13 bilden den Antrieb 7 für den beweglichen Kolben 5.

Der Zylinder 4 und und die vom Dosiervolumen 8 abgewandte Seite des beweglichen Kolbens 5 begrenzen ein Druckausgleichsvolumen 14, welches vollständig mit einer die Eigenschaften der Ausgangskomponente 3 und der Giessharzmasse nicht beeinflussenden Sperrflüssigkeit gefüllt ist. Das Druckausgleichsvolumen 14 kommuniziert mit einem Pufferbehälter 15, welcher teilweise mit der Sperrflüssigkeit gefüllt und mit Druckgas 16 von veränderlichem Druck beaufschlagbar ist. Eine Drucksteuervorrichtung 17 mit einem Druckgaseinlassventil 18 und einem Druckgasauslassventil 19 mündet oberhalb eines Niveauschalters 150 in den Pufferbehälter 15. Ein Absinken des Niveauschalters 150 zeigt an, dass Sperrflüssigkeit ins Dosiervolumen gelangt. Ein Ansteigen des Niveauschalters 150 zeigt an, dass Ausgangskomponente 3 ins Druckausgleichsvolumen 14 gelangt. Bei konstantem Niveauschalter 150 ist sichergestellt, dass sowohl aus dem Dosiervolumen 8 keine Ausgangskomponente 3 ins Druckausgleichsvolumen 14 gelangt als auch keine Sperrflüssigkeit aus dem Druckausgleichsvolumen 14 ins Dosiervolumen 8.

Jeder Ansaug- und jeder Förderhub des Kolbens 5 wird durch nachfolgend beschriebene Sensoren überwacht und mittels einer Ausgangssignale der Sensoren empfangenden Kontrollvorrichtung 20 gesteuert. Einer dieser Sensoren ist ein Inkrementalgeber 21, welcher mit dem Antriebselement 13 oder aber dem Getriebemotor 12 zusammenwirkt und den Drehwinkel des Antriebselementes oder des Getriebemotors 12 angibt. Durch die Angabe des Drehwinkels sind die Positionen der Spindel 11 und des Kolbens 5 bestimmt und ist damit auch die aktuelle Grösse des Dosiervolumens 8 festgelegt.

Die Endlagen des Kolbens 5 vor und nach einem Ansaug- oder Förderhub werden mit Hilfe eines Positionsanzeigers 22 ermittelt. Dieser Positionsanzeiger weist ein mit der verschieblichen Kolbenstange 6 oder der verschieblichen Spindel 11 starr verbundenes Geberelement 23 auf, welches bei der Ausführung eines Ansaug- oder Förderhubs mit zwei auf einer nicht bezeichneten Führungsschiene angebrachten Endschaltern 24, 25 zusammenwirkt.

Im Einlass- und/oder Auslassbereich des Dosiervolumens 8 sind ein den Druck der Ausgangskomponente 3 im Dosiervolumen erfassender Drucksensor 26 sowie ein die Temperatur der Ausgangskomponente 3 erfassender Temperatursensor 27 angeordnet. Der Druckgasdruck im Pufferbehälter 15 wird mit einem Drucksensor 28 erfasst. Die Drucksensoren 26 und 28 und die Drucksteuervorrichtung 17 sind Teil einer Druckdifferenz-Überwachungsvorrichtung, welche den Druck der im Dosiervolumen befindlichen Ausgangskomponente und den Druck der im Druckausgleichsvolumen befindlichen Sperrflüssigkeit erfasst und die erfassten Drücke miteinander vergleicht, und welche nach dem Vergleich ein die Drucksteuervorrichtung ansteuerndes Signal bildet, falls der Betrag der Differenz der erfassten Drücke in Sperrflüssigkeit und Ausgangskomponente einen vorgegebenen Grenzwert überschreitet.

Die Pumpe 2' ist im wesentlichen entsprechend der Pumpe 2 aufgebaut. Daher sind ihre einzelnen Teile nicht mit Bezugszeichen versehen. Lediglich der Antrieb 7' dieser Pumpe ist gekennzeichnet, da er im Unterschied zum Antrieb 7 der Pumpe 2 alternativ als Linearmotor ausgebildet ist.

Vor einem Dosier- und Fördervorgang werden in Abhängigkeit von der Form und der Grösse der Giessform sowie von der Konsistenz der Giessharzmasse zunächst die Grösse und Geschwindigkeit des Förderhubs bestimmende Sollwerte in die Kontrollvorrichtung 20 eingegeben und werden die Endschalter 24, 25 entsprechend diesen Sollwerten positioniert. Hierzu reicht es im allgemeinen aus, dass lediglich ein den Weg des Kolbens 5 während eines Ansaughubes begrenzender und damit die Grösse des Dosiervolumens 8 bestimmender Sollwert eingegeben ist. Für das davon im allgemeinen abweichende Dosiervolumen der Ausgangskomponente 3' wird in die Kontrollvorrichtung 20 ebenfalls ein Sollwert eingegeben. Zusätzlich kann in die Kontrollvorrichtung 20 auch eine die Geschwindigkeit des Füllhubs in Abhängigkeit von der Zeit steuernde Sollfunktion eingegeben werden.

Bei der Ausführung eines Ansaughubes der Pumpe 2 und entsprechend auch der Pumpe 2' überprüft die Kontrollvorrichtung 20 bei geöffnetem Schieberventil 9 und geschlossenem Schieberventil 10 sowie geschlossenem Druckgaseinlassventil 18 und geschlossenem Druckgasauslassventil 19 zunächst anhand der von den Drucksensoren 26 und 28 abgegebenen Ausgangssignale (gestrichelt dargestellte Wirklinien in Fig.1), ob in Dosiervolumen 8 und in Druckausgleichsvolumen 14 innerhalb eines vorgegebenen Toleranzwertes Druckgleichheit herrscht. Vorzugsweise sollte im Dosiervolumen 8 stets ein etwas kleinerer Druck als im Druckausgleichsvolumen 14 herrschen, damit in jedem Fall das Zutreten von abrasiver Flüssigkeit aus dem Dosiervolumen 8 ins Druckausgleichsvolumen 14 vermieden wird. Ist der Druck im Pufferbehälter 15 und damit im Druckausgleichsvolumen 14 zu niedrig, so erteilt die Kontrollvorrichtung 20 an das Druckgaseinlassventil 18 einen Öffnungsbefehl (gestrichelt dargestellte Wirklinie in Fig. 1). Durch das sich öffende Druckgaseinlassventil 18 wird in den Pufferbehälter 15 Druckgas 16 eingelassen und der im Pufferbehälter 15 und damit auch im Druckausgleichsvolumen 14 herrschende Druck erhöht.

Sobald die Kontrollvorrichtung 20 Druckgleichheit innerhalb des vorgegebenen Toleranzwertes feststellt, welcher beispielsweise 0,5 bar betragen kann, wird das Druckgaseinlassventil 18 geschlossen und wird der Antrieb 7 eingeschaltet. Der Kolben 5 wird nun unter Ansaugen von Ausgangskomponente 3 (bzw. 3' bei der Pumpe 2') nach rechts geführt. Aus dem Druckausgleichsvolumen 14 wird hierbei gleichzeitig Sperrflüssigkeit in den Pufferbehälter 15 geführt und dadurch der Druckgasdruck erhöht. Durch geeignet lang bemessenes Öffnen des Druckgasauslassventils 19 wird jedoch Druckgleichheit im Druckausgleichsvolumen 14 und im Dosiervolumen 8 beibehalten. Der Ansaughub des Kolben 5 wird durch den Inkrementalgeber 21 kontinuierlich überwacht und fortlaufend mit dem gespeicherten Sollwert des Förderhubs verglichen.

Sobald der Ansaughub und der gespeicherte Sollwert des Förderhubs bei jeder der beiden Pumpen 2, 2' übereinstimmen, wird das Schieberventil 9 geschlossen und das Schieberventil 10 geöffnet. Entsprechend werden auch die Ein- und Auslassventile der Pumpe 2' betätigt. Der Positionsanzeiger 22 überprüft hierbei durch Abgabe eines Meldesignals des Endschalters 25 an die Kontrollvorrichtung 20 die Positionierung des Kolbens 5 in seiner die maximale Grösse des Dosiervolumens 8 bestimmenden Endlage. Die vom Temperatursensor 27 erfasste Temperatur der Ausgangskomponente wird in der Kontrollvorrichtung 20 verarbeitet und dient der Korrektur der durch eine Temperaturänderung veränderten Menge an dosierter Ausgangskomponente 3. Entsprechendes gilt auch für die Ausgangskomponente 3'. Stellt die Kontrollvorrichtung 20 beispielsweise fest, dass sich die Temperatur der Ausgangskomponente 3 erhöht hat, so bedeutet dies, dass wegen der bei erhöhter Temperatur verringerten Dichte bei konstantem Dosiervolumen 8 eine zu geringe Menge an Ausgangskomponente 3 während des Ansaughubs angesaugt wird. Die Kontrollvorrichtung berücksichtigt diesen Sachverhalt und bildet aus dem Temperatursignal anhand eines Algorithmus einen den Weg des Kolbens 5 verlängernden und damit das Dosiervolumen vergrössernden korrigierten Sollwert.

Die Antriebe 7 und 7' werden nun umgesteuert und die Ausgangskomponenten 3 und 3' durch Rückführung des Kolbens 5 und des nicht bezeichneten Kolbens der Pumpe 2' in den Mischer 1 gefördert. Während des Förderns der Ausgangskomponenten in den Mischer überwacht die Kontrollvorrichtung 20 ständig die durch den Inkrementalgeber 21 der Pumpe 2 und den nicht bezeichneten Inkrementalgeber der Pumpe 2' ermittelten Kolbenpositionen und damit fortlaufend das Dosierverhältnis der Ausgangskomponenten 3, 3'. Durch Änderung der Fördergeschwindigkeit einer der beiden Pumpen 2, 2' wird das Dosierverhältnis fortlaufend korrigiert und so eine besonders gut dosierte Giessharzmasse erreicht. Während der Ausführung des Förderhübe überwachen die Drucksensoren 26 und 28 sowie die entsprechenden Drucksensoren der Pumpe 2' die in den Dosier- und Druckausgleichsvolumina herrschenden Drücke. Die von den Drucksensoren ermittelten Druckwerte werden - wie beim Ansaughub beschrieben - in der Kontrollvorrichtung 20 zur Steuerung der Drucksteuervorrichtung 17 und der nicht bezeichneten Drucksteuervorrichtung der Pumpe 2' verwendet.

Im allgemeinen wird eine der beiden Ausgangskomponenten, z.B. die Ausgangskomponente 3, hochviskos sein und und abrasive Füllstoffe enthalten. Dies ist z.B. dann der Fall, wenn diese Ausgangskomponente von einem einen hohen Anteil an Füllstoffen aufweisenden Harz, etwa auf der Basis eines Epoxids, gebildet ist. In diesem Fall müsste der Antrieb 7 eine hohe Antriebsenergie aufbringen, falls im Dosiervolumen 8 und im Druckausgleichsvolumen 14 annähernd Druckgleichheit herrschen sollen. Der Antrieb 7 kann jedoch äusserst klein gehalten und daher sehr präzise gesteuert werden, wenn als Sperrflüssigkeit im Druckausgleichsvolumen 14 das füllstofffreie und daher verhältnismässig gering viskose Harz verwendet wird, und wenn beim Förderhub der Druck im Druckausgleichsvolumen 14 etwas höher als im Dosiervolumen 8 ist.

Die Pumpen 2, 2' können wegen ihrer verhältnismässig grossen Dosiervolumina mit einer geringen Fördergeschwindigkeit betrieben werden und sind daher nur einem geringen Verschleiss selbst beim Fördern abrasiver Stoffe unterworfen. Dies gilt vor allem für die Ein- und Auslassventile. Wegen der geringen Fördergeschwindigkeit und des grossen Förderhubs brauchen diese Ventile während der Herstellung der für das Füllen einer Giessform benötigten Giessharzmasse im allgemeinen jeweils nur einmal betätigt zu werden. Diese Ventile müssen daher nicht als verschleissanfällige Sitzventile ausgeführt werden, sondern werden mit Vorteil als Schieberventile (Schieberventile 9 und 10 bei Pumpe 2) ausgebildet. Weisen diese Schieberventile jeweils zwei in Serie geschaltete drehbare Ventilkörper mit rotationssymmetrischer Dichtfläche auf, so werden Dosierfehler mit besonders grosser Sicherheit vermieden.

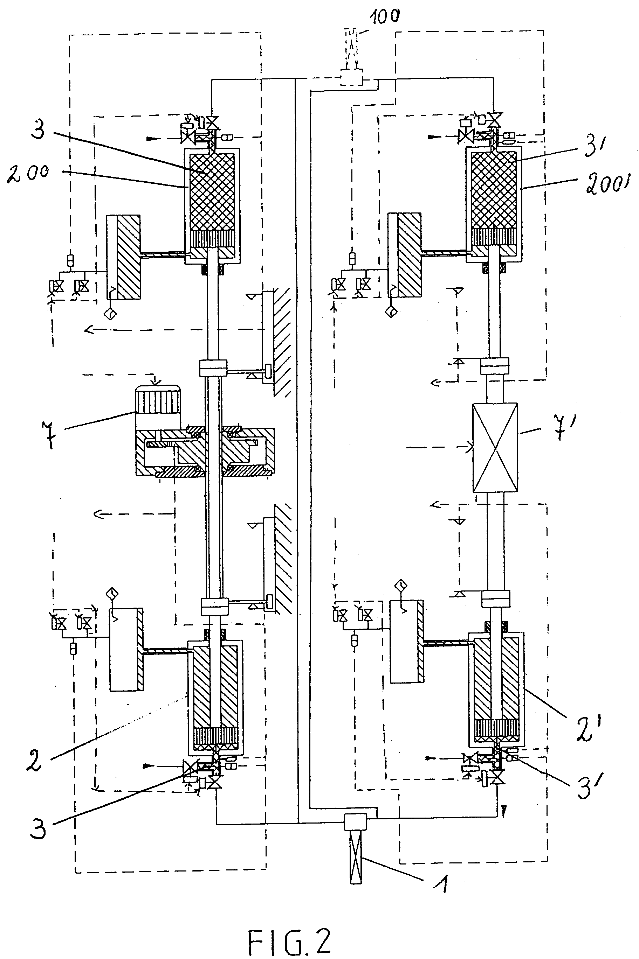

Bei dem in Fig.2 dargestellten Anlagenteil ist der Antrieb 7 zugleich auch der Antrieb einer Pumpe 200 und der Antrieb 7' zugleich auch der Antrieb einer Pumpe 200'. Die Einlässe der Pumpen 200 und 200' sind entsprechend den Einlässen der Pumpen 2, 2' jeweils mit einem die Ausgangskomponente 3 oder 3' aufnehmendem Behälter verbunden. Die Auslässe der Pumpen 200 und 200' sind entweder entsprechend den Pumpen 2 und 2' mit dem Mischer 1 (Parallelschaltung) oder mit einem weiteren Mischer 100 verbindbar. Bei Parallelschaltung der Pumpen 2 und 200 bzw. 2' und 200' werden die Kolben der Pumpen 2 und 200 bzw. 2 und 200' zueinander gegenläufig angetrieben. Im Mischer 1 wird dann kontinuierlich Giessharzmasse hergestellt, welche mit Vorteil zum Füllen besonders grossen Giessformen verwendet werden kann. Bei Verwendung des Mischers 100 wird die Taktfrequenz der Giessharzverarbeitungsanlage verdoppelt.

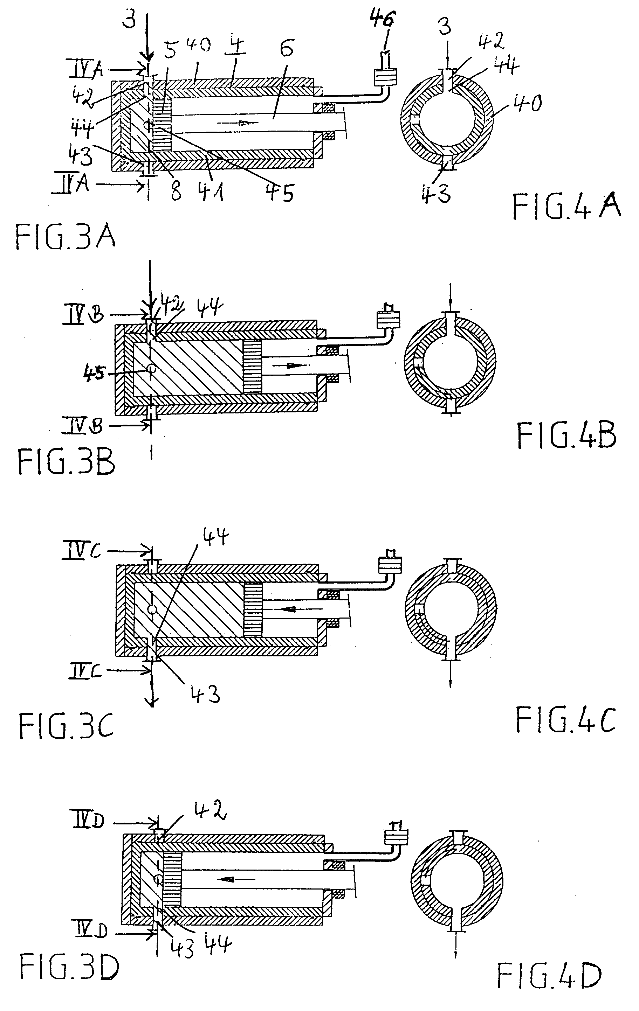

Bei der alternativen Ausführungsform der Pumpe 2 gemäss den Figuren 3A bis 3D und 4A bis 4D ist der Zylinder 4 von einem feststehenden Zylindermantel 40 und einer Hülse 41 gebildet, welche unter Bildung von Dichtflächen auf der Innenfläche des feststehenden Zylindermantels 40 um die Zylinderachse drehbar gelagert ist. In der Wand des Zylindermantels 40 sind zwei einander diametral gegenüberstehende Öffnungen 42 und 43 angebracht, von denen die Öffnung 42 einen Einlass für die Ausgangskomponente 3 ins Dosiervolumen 8 und die Öffnung 43 einen Auslass für die dosierte Menge der Ausgangskomponente 3 aus dem Dosiervolumen 8 zum Mischer bildet. In der Wand der Hülse 41 sind eine dritte Öffnung 44 sowie gegebenenfalls eine gegenüber der Öffnung 44 um 90° in Umfangsrichtung versetzt angeordnete Öffnung 45 vorgesehen. 46 bezeichnet ein flexibel ausgebildetes Verbindungselement, welches das Druckausgleichsvolumen 14 mit dem Pufferbehälter 15 verbindet.

Beim Einlassen der Ausgangskomponente 3 in das Dosiervolumen 8 (Figuren 3A bis 4B) fluchtet die Öffnung 44 mit der Öffnung 42, so dass die Ausgangskomponente 3 ins Dosiervolumen 3 einströmen kann. Wenn sich nach Ausführen eines ausreichend bemessenen Ansaughubs die erwünschte Menge an Ausgangskomponente 3 im Dosiervolumen befindet, wird die Hülse 41 bei flexibel nachgebendem Verbindungselement 46 solange um die Zylinderachse gedreht bis die Öffnung 44 mit der Öffnung 43 fluchtet. Die Öffnung 42 ist nun von Dosiervolumen 8 abgeschlossen, wohingegen das Dosiervolumen 8 jetzt über die Öffnungen 43 und 44 mit dem Mischer 1 verbunden ist. Beim nachfolgenden Förderhub wird die im Dosiervolumen 8 befindliche Ausgangskomponente 3 in den Mischer geführt (Fig.3C bis 4D).

Diese Ausführungsform der erfindungsgemässen Pumpe zeichnet sich dadurch aus, dass zwischen den beiden Öffnungen 42 und 43 eine sich über 180° erstreckende Dichtfläche vorhanden ist. Bei der Ausführungsform mit der alternativ vorgesehenen weiteren Öffnung 45 erstreckt sich die Dichtfläche zwar nur über 90°, jedoch braucht in diesem Fall die Hülse 41 lediglich um 90° gedreht zu werden.

Bei der Ausführungsform der erfindungsgemässen Pumpe mit der Hülse 41 entfallen die vorzugsweise als Schieberventile 9, 10 ausgebildeten Ein- und Auslassventile. Daher ist die Pumpe besonders robust und kann zudem direkt an den Ausgangskomponente enthaltenden Behälter montiert werden. Wegen der direkten Montage der Pumpe 2 am Behälter ist lediglich ein geringer, das Einströmen der Ausgangskomponente 3 in das Dosiervolumen 8 der Pumpe 2 bewirkender Zuführdruck erforderlich. Da keine ausserhalb des Zylinders 4 liegenden Ein- und Auslassventile erforderlich sind und die Hülse 41 entsprechend dem Kolben 5 mit sehr langen Dichtflächen abgedichtet werden kann, ist der Leckverlust an Ausgangskomponente vernachlässigbar. Die Hülse 41 kann gegebenenfalls auch längs der Zylinderachse verschieblich im Zylindermantel 40 angeordnet sein. Das gegebenenfalls unerwünschte Drehen der Hülse 41 kann dann durch eine Längsverschiebung der Hülse 41 ersetzt werden.

### BEZUGSZEICHENLISTE

- 1: Mischer
- 2, 2': Pumpen
- 3, 3': Ausgangskomponenten
- 4: Zylinder
- 5: Kolben
- 6: Kolbenstange
- 7, 7': Antrieb
- 8: Dosiervolumen
- 9, 10: Schieberventile
- 11: Spindel
- 12: Getriebemotor
- 13: Antriebselement
- 14: Totvolumen
- 15: Pufferbehälter
- 16: Druckgas
- 17: Drucksteuervorrichtung
- 18: Druckgaseinlassventil
- 19: Druckgasauslassventil
- 20: Kontrollvorrichtung
- 21: Inkrementalgeber
- 22: Positionsanzeiger
- 23: Geberelement
- 24, 25: Endschalter
- 26: Drucksensor
- 27: Temperatursensor
- 28: Drucksensor
- 40: Zylindermantel
- 41: Hülse
- 42, 43,: Öffnungen
- 44, 45:
- 46: Verbindungselement
- 100: Mischer
- 150: Niveauschalter
- 200, 200': Pumpen

## Patentansprüche

1. Pumpe (2) zum Dosieren einer Ausgangskomponente (3) und zum Fördern einer dosierten Menge der Ausgangskomponente in einen Mischer (1), in dem die Ausgangskomponente (3) mit einer dosierten Menge einer weiteren Ausgangskomponente (3') und mit gegebenenfalls vorgesehenen dosierten Mengen zusätzlicher Ausgangskomponenten zu einer reaktiven Giessharzmasse vermischt wird, mit
- einem von einem Zylinder (4) und einem beweglichen Kolben (5) begrenzten Dosiervolumen (8) für die Ausgangskomponente,
- einem vom Zylinder (4) und einer vom Dosiervolumen abgewandten Fläche des Kolbens (5) begrenzten und vollständig mit Sperrflüssigkeit gefülltem Druckausgleichsvolumen (14),
- einem auf den beweglichen Kolben (5) wirkenden Antrieb (7) zur Veränderung des Dosiervolumens (8) während eines die Ausgangskomponente in den Mischer (1) führenden Förderhubs,
- mindestens einem den Förderhub des Kolbens (5) überwachenden Sensor, und mit
- einer Ausgangssignale des mindestens einen Sensors verarbeitenden und den Antrieb (7) steuernden Kontrollvorrichtung (20),
gekennzeichnet durch folgende Merkmale:
- der Antrieb weist ein bei der Ausführung des Förderhubs rotierendes und von einem Inkrementalgeber (21) als Sensor für den Förderhub überwachtes Teil auf,
- das Druckausgleichsvolumen (14) wirkt mit einer den Druck der Sperrflüssigkeit steuernden Drucksteuervorrichtung (17) zusammen, und
- es ist eine Druckdifferenz-Überwachungsvorrichtung vorgesehen, welche den Druck der im Dosiervolumen (8) befindlichen Ausgangskomponente (3) und den Druck der im Druckausgleichsvolumen (14) befindlichen Sperrflüssigkeit erfasst und die erfassten Drücke miteinander vergleicht, und welche nach dem Vergleich ein die Drucksteuervorrichtung (17) ansteuerndes Signal bildet, falls der Betrag der Differenz der Drücke in Sperrflüssigkeit und Ausgangskomponente (3) einen vorgegebenen Grenzwert überschreitet.

2. Pumpe nach Anspruch 1, dadurch gekennzeichnet, dass der Grenzwert derart festgelegt ist, dass bei darunter liegenden Beträgen der Druckdifferenz der Übertritt von Ausgangskomponente (3) ins Druckausgleichsvolumen (14) und von Sperrflüssigkeit ins Dosiervolumen (8) vermieden wird.

3. Pumpe nach einem der Ansprüche 1 oder 2, dadurch gekennzeichnet, dass die Geschwindigkeit des Förderhubs gemäss einer vorgegebenen Sollfunktion steuerbar ist.

4. Pumpe nach einem der Ansprüche 1 bis 3, dadurch gekennzeichnet, dass der den Förderhub ausführende Antrieb (7) einen Linearmotor oder einen Getriebemotor (12) und eine mit einer Schubbewegung auf den Kolben (5) wirkende drehgesicherte Spindel (11) aufweist.

5. Pumpe nach Anspruch 4, dadurch gekennzeichnet, dass das vom Inkrementalgeber (21) überwachte Teil des Antriebs (7) der Getriebemotor (12) oder ein vom Motor gedrehtes und auf die Spindel (11) wirkendes Antriebselement (13) ist.

6. Pumpe nach einem der Ansprüche 1 bis 5, dadurch gekennzeichnet, dass ein die Endlagen des Kolbens (5) vor und nach einem Förderhub ermittelnder Positionsanzeiger (22) vorgesehen ist.

7. Pumpe nach einem der Ansprüche 1 bis 6, dadurch gekennzeichnet, dass die Druckdifferenz-Überwachungsvorrichtung einen im Einlass- und/oder Auslassbereich des Dosiervolumens (8) angeordneten und den Druck der Ausgangskomponente (3) im Dosiervolumen (8) erfassenden ersten Drucksensor (26) und einen den Druck der Sperrflüssigkeit erfassenden zweiten Drucksensor (28) aufweist.

8. Pumpe nach einem der Ansprüche 1 bis 7, dadurch gekennzeichnet, dass das Druckausgleichsvolumen (14) mit einem Pufferbehälter (15) kommuniziert, welcher teilweise mit der Sperrflüssigkeit und teilweise mit Druckgas gefüllt ist, und bei dem der Druck des Druckgases und damit auch der Sperrflüssigkeit über die Drucksteuervorrichtung (17) veränderbar ist.

9. Pumpe nach Anspruch 8, dadurch gekennzeichnet, dass der Pufferbehälter (15) einen den Pegel der Sperrflüssigkeit überwachenden Niveauschalter (150) aufweist.

10. Pumpe nach einem der Ansprüche 1 bis 9, dadurch gekennzeichnet, dass im Einlass- und/oder Auslassbereich des Dosiervolumens (8) ein die Temperatur der Ausgangskomponente (3) erfassender Temperatursensor (27) vorgesehen ist, welcher auf die Kontrollvorrichtung (20) wirkt, und welcher der Korrektur der durch eine Temperaturänderung hervorgerufenen Änderung der dosierten Menge der Ausgangskomponente (3) dient.

11. Pumpe nach einem der Ansprüche 1 bis 10, dadurch gekennzeichnet, dass ein die Ausgangskomponente (3) zuführender Einlass des Dosiervolumens (8) mittels eines ersten Schieberventils (9) verschliessbar ist, und dass ein die dosierte Menge an Ausgangskomponente (3) dem Mischer (1) zuführender Auslass des Dosiervolumens (8) nach Schliessen des ersten Schieberventils (9) durch ein zweites Schieberventil (10) mit dem Mischer (1) verbindbar ist.

12. Pumpe nach Anspruch 11, dadurch gekennzeichnet, dass das erste (9) und das zweite Schieberventil (10) jeweils zwei hintereinander im Förderweg der Ausgangskomponente (3) angeordnete, drehbare Ventilkörper mit rotationssymmetrisch ausgebildeten Dichtflächen aufweisen.

13. Pumpe nach einem der Ansprüche 1 bis 10, dadurch gekennzeichnet, dass der Zylinder (4) von einem feststehenden Zylindermantel (4O) und einer Hülse (41) gebildet ist, dass in der Wand des feststehenden Zylindermantels (40) zwei in Umfangsrichtung voneinander bestandete Öffnungen (42, 43) angebracht sind, von denen eine erste (42) einen Einlass für die Ausgangskomponente (3) ins Dosiervolumen (8) und eine zweite (43) einen Auslass für die dosierte Menge der Ausgangskomponente (3) aus dem Dosiervolumen (8) zum Mischer (1) bildet, und dass die Hülse (41) unter Bildung von Dichtflächen mit der Innenfläche des feststehenden Zylindermantels (40) um die Zylinderachse drehbar und/oder längs der Zylinderachse verschiebbar gelagert ist und mindestens eine dritte Öffnung (44, 45) aufweist, welche beim Einlassen der Ausgangskomponente (3) in das Dosiervolumen (8) mit der ersten Öffnung (42) und beim Auslassen der dosierten Ausgangskomponente (3) mit der Zweiten Öffnung (43) fluchtet.

14. Verwendung einer ersten Pumpe (2) gemäss Anspruch 1 in einer Anlage zur Herstellung einer Giessharzmasse, wobei der auf den beweglichen Kolben (5) wirkende Antrieb (7) der ersten Pumpe (2) zugleich der Antrieb (7) einer im Förderweg der Ausgangskomponente (3) parallel zur ersten Pumpe (2) geschalteten zweiten Pumpe (200) ist.

15. Verwendung nach Anspruch 14, dadurch gekennzeichnet, dass der Kolben (5) der ersten Pumpe (2) gegenläufig zum Kolben der zweiten Pumpe (200) angetrieben ist, und dass das Dosiervolumen der zweiten Pumpe (200) mit dem Mischer (1) verbunden ist.

## Claims

1. Pump (2) for metering a starting component (3) and for delivery of a metered amount of the starting component into a mixer (1), in which the starting component (3) is mixed with a metered amount of a further starting component (3') and with optionally provided metered amounts of additional starting components to form a reactive casting resin compound, having
- a metering volume (8), delimited by a cylinder (4) and a movable piston (5), for the starting component,
- a pressure compensation volume (14) which is delimited by the cylinder (4) and a surface, remote from the metering volume, of the piston (5) and is completely filled with sealing liquid,
- a drive (7) which acts on the movable piston (5) for altering the metering volume (8) during a conveying stroke feeding the starting component into the mixer (1),
- at least one sensor monitoring the conveying stroke of the piston (5), and having
- a supervisory unit (20) which processes output signals from the at least one sensor and controls the drive (7),
characterized by the following features:
- the drive has a part which rotates during the execution of the delivery stroke and is monitored by an incremental pickup (21) as a sensor for the delivery stroke,
- the pressure compensation volume (14) interacts with a pressure control unit (17) which controls the pressure of the sealing liquid, and
- a pressure-difference monitoring unit is provided, which detects the pressure of the starting component (3) situated in the metering volume (8) and the pressure of the sealing liquid situated in the pressure compensation volume (14) and compares the detected pressures with one another, and which, following the comparison, forms a signal which actuates the pressure control unit (17) if the amount of the difference in the pressures in the sealing liquid and starting component (3) exceeds a predetermined limit value.

2. Pump according to Claim 1, characterized in that the limit value is established such that, if the amounts of the pressure difference lie below this value, the passage of starting component (3) into the pressure compensation volume (14) and of sealing liquid into the metering volume (8) is avoided.

3. Pump according to either of Claims 1 or 2, characterized in that the speed of the delivery stroke can be controlled in accordance with a predetermined desired function.

4. Pump according to one of Claims 1 to 3, characterized in that the drive (7) which executes the delivery stroke has a linear motor or a geared motor (12) and a rotationally fixed spindle (11) which acts on the piston (5) with a translational movement.

5. Pump according to Claim 4, characterized in that that part of the drive (7) which is monitored by the incremental pickup (21) is the geared motor (12) or a drive element (13) which is rotated by the motor and acts on the spindle (11).

6. Pump according to one of Claims 1 to 5, characterized in that a position indicator (22) which determines the end positions of the piston (5) before and after a delivery stroke is provided.

7. Pump according to one of Claims 1 to 6, characterized in that the pressure-difference monitoring unit has a first pressure sensor (26) which is arranged in the inlet and/or outlet region of the metering volume (8) and detects the pressure of the starting component (3) in the metering volume (8) and a second pressure sensor (28) which detects the pressure of the sealing liquid.

8. Pump according to one of Claims 1 to 7, characterized in that the pressure compensation volume (14) communicates with a buffer container (15), which is partly filled with the sealing liquid and partly with compressed gas, and in which the pressure of the compressed gas, and thus also of the sealing liquid, can be altered by means of the pressure control unit (17).

9. Pump according to Claim 8, characterized in that the buffer container (15) has a level switch (150) which monitors the level of the sealing liquid.

10. Pump according to one of Claims 1 to 9, characterized in that a temperature sensor (27) is provided in the inlet and/or outlet region of the metering volume (8), which sensor detects the temperature of the starting component (3), acts on the supervisory unit (20) and is used to correct the alteration in the metered amount of starting component (3) brought about by a change in temperature.

11. Pump according to one of Claims 1 to 10, characterized in that an inlet, supplying the starting component (3), of the metering volume (8) can be closed off by means of a first sliding valve (9), and in that an outlet, supplying the metered amount of starting component (3) to the mixer (1), of the metering volume (8) can be connected to the mixer (1) by means of a second sliding valve (10) after the first sliding valve (9) has been closed.

12. Pump according to Claim 11, characterized in that the first (9) and the second (10) sliding valves each case have two rotatable valve bodies which are arranged on behind the other in the conveying path of the starting component (3) and have sealing surfaces of rotationally symmetrical design.

13. Pump according to one of Claims 1 to 10, characterized in that the cylinder (4) is formed by a fixed cylinder casing (40) and a sleeve (41), in that two openings (42, 43), which are spaced apart from one another in the circumferential direction, are made in the wall of the fixed cylinder casing (40), a first (42) of which forms an inlet for the starting component (3) into the metering volume (8) and a second (43) of which forms an outlet for the metered amount of the starting component (3) from the metering volume (8) to the mixer (1), and in that the sleeve (41) is mounted so as to be rotatable about the cylinder axis and/or to be displaceable along the cylinder axis, forming sealing surfaces with the inner surface of the fixed cylinder casing (40), and has at least a third opening (44, 45), which during admission of the starting component (3) into the metering volume (8) is aligned with the first opening (42) and when letting out the metered starting component (3) is aligned with the second opening (43).

14. Use of a first pump (2) in accordance with Claim 1 in an installation for producing a casting resin compound, the drive (7), acting on the movable piston (5), of the first pump (2) simultaneously being the drive (7) of a second pump (200) which is connected in parallel with the first pump (2) in the delivery path of the starting component (3).

15. Use according to Claim 14, characterized in that the piston (5) of the first pump (2) is driven in the opposite direction to the piston of the second pump (200), and in that the metering volume of the second pump (200) is connected to the mixer (1).

## Revendications

1. Pompe (2) pour le dosage d'un composant de départ (3) et pour le transport d'une quantité dosée du composant de départ dans un mélangeur (1), dans lequel un composant de départ (3) est mélangé à une quantité dosée d'un autre composant de départ (3') et à des quantités dosées éventuellement prévues de composants de départ supplémentaires, en une masse de résine de moulage réactive, avec
- un volume de dosage (8) délimité par un cylindre (4) et un piston mobile (5), pour le composant de départ,
- un volume d'équilibrage de la pression (14) délimité par le cylindre (4) et une face du piston (5) située à l'opposé du volume de dosage et rempli entièrement d'un liquide de blocage,
- un dispositif d'entraînement (7) agissant sur le piston mobile (5) pour faire varier le volume de dosage (8) pendant une course de transport conduisant le composant de départ dans le mélangeur (1),
- au moins un détecteur surveillant la course de transport du piston (5), et
- un dispositif de contrôle (20) traitant des signaux de sortie dudit au moins un détecteur et commandant le dispositif d'entraînement (7),
caractérisée par les caractéristiques suivantes:
- le dispositif d'entraînement présente une partie tournant lors de l'exécution de la course de transport et surveillée par un capteur incrémental (21) comme détecteur pour la course de transport,
- le volume d'équilibrage de la pression (14) coopère avec un dispositif de commande de la pression (17) commandant la pression du liquide de blocage, et
- il est prévu un dispositif de surveillance de la différence de pression, qui mesure la pression du composant de départ (3) se trouvant dans le volume de dosage (8) et la pression du liquide de blocage se trouvant dans le volume d'équilibrage de la pression (14) et qui compare l'une à l'autre les pressions mesurées, et qui forme, après cette comparaison, un signal activant le dispositif de commande de la pression (17), au cas où la valeur de la différence des pressions dans le liquide de blocage et dans le composant de départ (3) dépasse une valeur limite prédéterminée.

2. Pompe suivant la revendication 1, caractérisée en ce que la valeur limite est fixée de telle façon que, pour des valeurs de la différence de pression inférieures à celle-ci, on évite le passage de composant de départ (3) dans le volume d'équilibrage de la pression (14) et de liquide de blocage dans le volume de dosage (8).

3. Pompe suivant l'une quelconque des revendications 1 ou 2, caractérisée en ce que la vitesse de la course de transport peut être commandée suivant une fonction de consigne prédéterminée.

4. Pompe suivant l'une quelconque des revendications 1 à 3, caractérisée en ce que le dispositif d'entraînement (7) exécutant la course de transport présente un moteur linéaire ou un moto-réducteur (12) et une broche (11) calée en rotation agissant avec un mouvement de glissement sur le piston (5).

5. Pompe suivant la revendication 4, caractérisée en ce que la partie du dispositif d'entraînement (7) surveillée par le capteur incrémental (21) est le moto-réducteur (12) ou un organe d'entraînement (13) mis en rotation par le moteur et agissant sur la broche (11).

6. Pompe suivant l'une quelconque des revendications 1 à 5, caractérisée en ce qu'il est prévu un indicateur de position (22) déterminant les positions extrêmes du piston (5) avant et après une course de transport.

7. Pompe suivant l'une quelconque des revendications 1 a 6, caractérisée en ce que le dispositif de surveillance de la différence de pression présente un premier détecteur de pression (26) disposé dans la région de l'entrée et/ou de la sortie du volume de dosage (8) et mesurant la pression du composant de départ (3) dans le volume de dosage (8) et un second détecteur de pression (28) mesurant la pression du liquide de blocage.

8. Pompe suivant l'une quelconque des revendications 1 à 7, caractérisée en ce que le volume d'équilibrage de la pression (14) communique avec un réservoir tampon (15), qui est rempli partiellement avec le liquide de blocage et partiellement avec un gaz comprimé, et dans lequel la pression du gaz comprimé et ainsi aussi celle du liquide de blocage peut être modifiée par le dispositif de commande de la pression (17).

9. Pompe suivant la revendication 8, caractérisée en ce que le réservoir tampon (15) présente un interrupteur de niveau (150) surveillant le niveau du liquide de blocage.

10. Pompe suivant l'une quelconque des revendications 1 à 9, caractérisée en ce qu'il est prévu, dans la région de l'entrée et/ou de la sortie du volume de dosage (8), un détecteur de température (27) mesurant la température du composant de départ (3), qui agit sur le dispositif de contrôle (20), et qui sert à corriger la variation de la quantité dosée du composant de départ (3) provoquée par une variation de la température.

11. Pompe suivant l'une quelconque des revendications 1 à 10, caractérisée en ce qu'une entrée du volume de dosage (8) admettant le composant de départ (3) peut être fermée au moyen d'une première vanne à tiroir (9) et en ce qu'une sortie du volume de dosage (8) fournissant la quantité dosée du composant de départ (3) au mélangeur (1) peut être raccordée au mélangeur (1) par une seconde vanne à tiroir (10) après la fermeture de la première vanne à tiroir (9).

12. Pompe suivant la revendication 11, caractérisée en ce que la première (9) et la seconde (10) vannes à tiroir présentent chacune deux corps de vanne rotatifs, disposés l'un après l'autre sur le trajet de transport du composant de départ (3), avec des faces d'étanchéité à symétrie de rotation.

13. Pompe suivant l'une quelconque des revendications 1 à 10, caractérisée en ce que le cylindre (4) est formé par une chemise de cylindre (40) fixe et un manchon (41), en ce que deux ouvertures (42, 43) sont ménagées dans la paroi de la chemise de cylindre (40) fixe, à distance l'une de l'autre dans la direction périphérique, dont une première (42) forme une entrée pour le composant de départ (3) dans le volume de dosage (8) et une deuxième (43) forme une sortie pour la quantité dosée du composant de départ (3) hors du volume de dosage (8) vers le mélangeur (1), et en ce que le manchon (41) peut tourner autour de l'axe du cylindre et/ou peut coulisser le long de l'axe du cylindre en formant des faces d'étanchéité avec la face intérieure de la chemise de cylindre (40) fixe et présente au moins une troisième ouverture (44, 45), qui s'aligne avec la première ouverture (42) lors de l'entrée du composant de départ (3) dans le volume de dosage (8) et avec la deuxième ouverture (43) lors de la sortie du composant de départ (3) dosé.

14. Utilisation d'une première pompe (2) suivant la revendication 1 dans une installation pour la fabrication d'une masse de résine de moulage, dans laquelle le dispositif d'entraînement (7) de la première pompe (2) agissant sur le piston mobile (5) est aussi le dispositif d'entraînement (7) d'une seconde pompe (200) installée dans le trajet de transport du composant de départ (3) en parallèle avec la première pompe (2).

15. Utilisation suivant la revendication 14, caractérisée en ce que le piston (5) de la première pompe (2) est entraîné en sens contraire par rapport au piston de la seconde pompe (200), et en ce que le volume de dosage de la seconde pompe (200) est raccordé au mélangeur (1).
